# EUROPÄISCHE PATENTSCHRIFT

(11) **EP 1 331 491 B1**
(45) Veröffentlichungstag und Bekanntmachung des Hinweises auf die Patenterteilung: **28.11.2007**
(21) Anmeldenummer: 02023765.7
(22) Anmeldetag: 24.10.2002
(51) Int. Cl.: G01S 7/526, G01S 15/04, G01S 15/06

(54) **Schaltungsanordnung zur Einspeisung von Testsignalen in eine Verstärkungsschaltung**
Circuit for injecting test signals in an amplifier circuit
Circuit pour introduire des signaux de test dans un circuit d'amplification

(30) Priorität: 29.01.2002 DE 10203562
(43) Veröffentlichungstag der Anmeldung: 30.07.2003
(73) Patentinhaber: ATLAS ELEKTRONIK GMBH, 28305 Bremen (DE)
(72) Erfinder: Wittschief, Norbert, 28832 Achim (DE)

(56) Entgegenhaltungen:
- US-A- 4 689 578
- US-A- 4 855 685
- US-A- 4 972 381
- US-A- 5 477 504
- US-A- 6 046 632

## Beschreibung

Die Erfindung betrifft eine Schaltungsanordnung zur Einspeisung von Testsignalen in mindestens eine Verstärkungsschaltung für Ausgangssignale eines Hydrofons einer Unterwasser-Empfangsantenne, die mindestens eine symmetrische Verstärkerstufe mit an den Hydrofonausgängen angeschlossenen Ladungsverstärkern aufweist.

Bei Sonaranlagen heutiger Bauweise erfolgt die Signalverarbeitung digital, so daß die Ausgangssignale der Vielzahl von Hydrofonen einer Unterwasser-Empfangsantenne (Zylinderbasis, Flank-Array, PRS-Basis, Inercept-Basis) nach analoger Verstärkung am Ausgang eines jeden Hydrofonkanals in digitaler Form vorliegen müssen. Dabei werden die analogen und digitalen Bausteine der Verstärkungsschaltung eines oder mehreren Hydrofonkanäle auf einer Leiterkarte untergebracht, die in einem Gehäuse aufgenommen ist. Alle der Vielzahl der Hydrofone zugehörigen Gehäuse werden zusammen mit den auf einem Träger angeordneten Hydrofonen der Empfangsantenne wasserdicht vergossen. Beispiele für eine Verstärkungsschaltung für analoge Signale finden sich in der FR 2 310 655 A1 oder US 4 016 557 A und für eine Verstärkungsschaltung mit umschaltbarer Verstärkung für Hydrofonausgangssignale in der am 26.03.2002 veröffentlichen

Bei einer bekannten Schaltungsanordnung zum Einspeisen von Testsignalen in eine Verstärkungsschaltung (US-A 4 689 578), die eine symmetrische Verstärkerstufe mit zwei Ladungsverstärkern, deren Eingänge an die Ausgänge eines Hydrofons angeschlossen sind, aufweist ist eine Signalquelle zur Erzeugung von Testsignalen, dort "calibration circuit" genannt, über einen elektronischen Schalter an den nicht invertierenden Eingang des einen Ladungsverstärkers anschließbar, der hierzu mittels de Schalters vom Nullpotential abgekoppelt wird.

Eine bekannte Verstärkungsschaltung (US-A 6 046 632) weist eine als Spannungsverstärker ausgebildete Vorverstärkerstufe auf, die einen Differenz-Operationsverstärker mit einem invertierenden und einem nicht invertierenden Eingang sowie mit einem nicht invertierenden und einem invertieren Ausgang aufweist. An den beiden Eingängen des Operationsverstärkers sind jeweils die Sourcen eines Feldeffekttransistors (FET) angeschlossen. Der nicht invertierende Ausgang des Operationsverstärkers ist auf den Drain des an dem invertierenden Eingang des Operationsverstärkers angeschlossenen FET und der invertierende Ausgang des Operationsverstärkers ist auf den Drain des an dem nicht invertierenden Eingang des Operationsverstärkers angeschlossenen FET rückgekoppelt. Zum Prüfen der Funktionalität der Verstärkungsschaltung ist ein Test- oder Kalibriergenerator mit seinen beiden Ausgängen an die Drains der beiden FETs angeschlossen. Die Verbindung der Ausgänge des Kalibriergenerators mit den Drains ist über hochohmige Widerstände hergestellt. Um im Hydrofonbetrieb den Kalibriergenerator sicher von der Verstärkungsschaltung abzukoppeln, ist im Kalibriergenerator ein Schalter vorgesehen, der die Ausgänge des Kalibriergenerators kurzschließt und die beiden hochohmigen Widerstände in Reihe schaltet, so dass der Eingang der Verstärkungsschaltung zum Kalibriergenerator hin hochohmig abgeschlossen ist.

Eine bekannte Verstärkungsschaltung für Hydrofonsignale (US-A 5 447 504) weist einen Differenz-Vorverstärker auf, an dessen Eingänge die Ausgänge eines Hydrofons über eine Widerstandsanordnung angeschlossen sind. Um die Funktionalität der Signalkette hinter dem Hydrofon zu prüfen, ist eine Schaltungsanordnung, dort "claibration circuit" genannt, vorgesehen, mittels welcher ein Test- oder Kalibriersignal in die Verstärkungsschaltung eingespeist werden kann. Die Schaltungsanordnung weist einen Breitband-Signalgenerator und ein Schaltnetzwerk auf, das den Signalgenerator an die Verstärkungsschaltung anschließt oder von der Verstärkungsschaltung trennt. Das Schaltnetzwerk umfasst zwei Schaltrelais mit jeweils zwei Schaltkontakten, die im Schließzustand einerseits den oberen Potentialausgang des Signalgenerators mit den Eingängen des Differenz-Vorverstärkers verbinden und andererseits die Ausgänge des Hydrofons auf Nullpotential legen und im geöffneten Zustand einerseits die Signalquelle vom dem Differenz-Vorverstärker und andererseits die Hydrofonausgänge vom Nullpotential abkoppeln.

Bei einer qualitativ hochwertigen Sonaranlage ist es erforderlich, hin und wieder die Funktionalität der Hydrofonkanäle überprüfen zu können, wobei es insbesondere darauf ankommt, die Gleichmäßigkeit der Signalverstärkung in allen Hydrofonkanälen zu prüfen. Hierzu dient eine Testsignal-Einspeisevorrichtung, die am Eingang einer jeden Verstärkungsschaltung ein Analogsignal bekannter Konfiguration einspeist. Die an den digitalen Ausgängen der Hydrofonkanäle abgenommenen, verstärkten Testsignale können dann hinsichtlich ihrer Amplitude und Phase miteinander verglichen und dadurch ein Funktionsausfall oder eine Mißfunktion eines oder mehrerer Hydrofonkanäle erkannt werden.

Der Erfindung liegt die Aufgabe zugrunde, eine Schaltungsanordnung zum Einspeisen von Testsignalen in mindestens eine Verstärkungsschaltung für die Ausgangssignale eines Hydrofons anzugeben, die einerseits außerhalb des Testmodus die Funktion der Verstärkungsschaltung nicht beeinflußt und andererseits innerhalb des Testmodus eine genaue Überprüfung der Verstärkung der Verstärkungsschaltung in einem sehr engen Toleranzbereich, z.B. ± 0,5 dB, zuläßt.

Die Aufgabe ist erfindungsgemäß durch die Merkmale im Anspruch 1 gelöst.

Die erfindungsgemäße Schaltungsanordnung zur Einspeisung von Testsignalen, hat den Vorteil, daß mit der Integration einer digitalen Signalquelle in die Schaltungsanordnung und deren Einbindung in den Verguß einer oder mehrerer Verstärkungsschaltungen sowie durch die elektronischen Schalter in den von der Signalquelle zu der Verstärkungsschaltung führenden Signalleitungen, ein Testmodus in den ansonsten unzugänglichen - da vergossenen - Hydrofonkanälen jederzeit ausgelöst werden kann und somit die ordnungsgemäße Funktion der Unterwasser-Empfangsantenne einer Sonaranlage zu beliebigen Zeitpunkten geprüft werden kann. Der Testmodus wird durch Schließen der vorzugsweise als MOS-Switch ausgebildeten elektronischen Schalter vom Operator willkürlich herbeigeführt. Nach Aufheben des Testmodus durch Öffnen der elektronischen Schalter werden über die geöffneten Schalter noch einstreuende Offset-Spannungen mittels des Dämpfungsglieds weitgehend reduziert, und durch die hochohmige Anbindung der Signalleitung an die Verstärkungsschaltung jegliche aus der abgeschalteten Signalquelle resultierende Einflüsse auf das Hydrofon oder die Verstärkungsschaltung unterdrückt.

Zweckmäßige Ausführungsformen der erfindungsgemäßen Schaltungsanordnung mit vorteilhaften Weiterbildungen und Ausgestaltungen der Erfindung ergeben sich aus den weiteren Ansprüchen.

Gemäß einer vorteilhaften Ausführungsform der Erfindung wird die hochohmige Anbindung der Signalquelle an die Verstärkungsschaltung mittels jeweils eines Kondensators vorgenommen, wobei jeweils ein Kondensator eine Signalleitung mit einem der beiden Eingänge der Ladungsverstärker verbindet, an denen das Hydrofon angeschlossen ist. Die Kapazität der Kondensator ist relativ klein gewählt und liegt beispielsweise im einstelligen nF-Bereich. Bei dieser Kondensatoranbindung der Signalleitungen müssen allerdings durch die kondensatorbedingte Einspeisung des Hydrofons im "Nullpunkt" außerhalb des Testmodus noch geringe Einflüsse der Schaltungsanordnung auf die Verstärkungsschaltung in Kauf genommen werden. Dies ist darin begründet, daß die Hydrofonausgangsspannung zusätzlich die an den Kondensatoren abfallende Spannung überwinden muß.

Gänzlich unterdrückt werden dagegen außerhalb des Testmodus die Einflüsse der Schaltungsanordnung auf das Hydrofon, wenn gemäß einer bevorzugten Ausführungsform der Erfindung die Anbindung der Signalleitungen an die Verstärkungsschaltung mittels eines Ohmschen Widerstandes mit großem Widerstandswert vorgenommen ist, der im drei- oder vierstelligen kΩ-Bereich liegt. Im Testmodus, also bei Aufschalten der Testsignale, werden die Ladungsverstärker dann zwar als Spannungsteiler betrieben, also nicht als Ladungsverstärker, deren Verstärkung durch die Beschaltungskapazität bestimmt ist, sondern als Rechenverstärker, deren Verstärkung durch den Beschaltungswiderstand und dem am invertierenden Eingang angeschlossenen hochohmigen Widerstand bestimmt ist, doch wird dadurch die Testtiefe, d.h. die Prüfung aller Bauteile in der Verstärkungsschaltung, nicht verändert. Hinzu kommt, daß Ohmsche Widerstände in einem sehr viel kleineren Toleranzbereich erhältlich sind als Kondensatoren, so daß die Gleichheit der in die Verstärkungsschaltungen in den verschiedenen Hydrofonkanälen eingespeisten Testsignale in wesentlich engeren Grenzen gewährleistet werden kann.

Gemäß einer vorteilhaften Ausführungsform der Erfindung ist in den Signalleitungen mindestens ein auf der Eingangsseite der elektronischen Schalter angeordnetes Filter vorgesehen, das vorzugsweise einen in jeder Signalleitung angeordneten Widerstand und einen an den beiden Signalleitungen angeschlossenen Kondensator umfaßt. Ein solches Filter dient zum Unterdrücken von hochfrequenten Störungen während des Testmodus.

Gemäß einer vorteilhaften Ausführungsform der Erfindung ist zwischen dem Filter und den elektronischen Schaltern in jeder Signalleitung ein zweiter elektronischer Schalter sowie ein auf der Ausgangsseite der elektronischen Schalter die beiden Signalleitungen miteinander verbindender, niederohmiger Widerstand vorgesehen. Diese zweiten elektronischen Schalter reduzieren Einflüsse der Testsignaleinspeise-Schaltunganordnung auf die Hydrofonausgangssignale außerhalb des Testmodus nochmals um einen weiteren Faktor.

Gemäß einer vorteilhaften Ausführungsform der Erfindung ist zwischen dem Filter und den in jeder Signalleitung angeordneten zweiten elektronischen Schaltern ein zweites Dämpfungsglied angeordnet. Dieses Dämpfungsglied ist ebenso wie das erste Dämpfungsglied als Spannungsteiler ausgebildet, der eine gleiche Widerstandsbemessung aufweist. Durch dieses weitere Dämpfungsglied wird der am Eingang der zweiten elektronischen Schalter anstehende Signalpegel der Signalquelle reduziert.

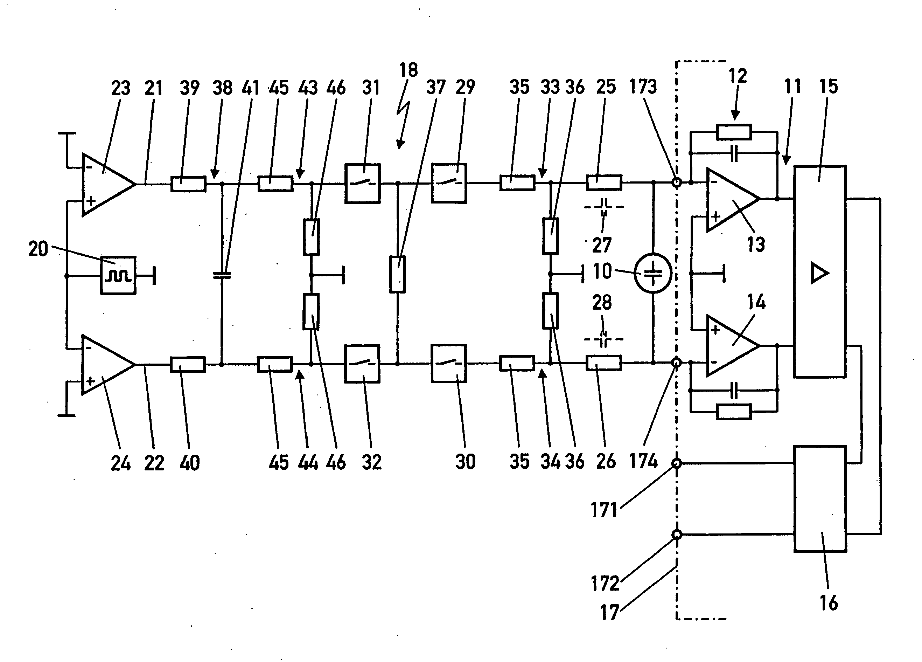

Die Erfindung ist anhand eines in der Zeichnung dargestellten Ausführungsbeispiels im folgenden näher beschrieben. Dabei zeigt die Zeichnung ein Schaltbild einer Schaltungsanordnung zur Einspeisung von Testsignalen in eine Verstärkungsschaltung für die Ausgangssignale eines Hydrofons.

Die im Schaltbild rechts dargestellte Verstärkungsschaltung 11 für ein Hydrofon 10 einer Unterwasser-Empfangsantenne ist symmetrisch aufgebaut und weist eine erste Verstärkerstufe 12 mit zwei Ladungsverstärkern 13, 14 auf, an deren invertierenden Eingängen das Hydrofon 10 angeschlossen ist. Der Verstärkerstufe 12 sind noch weitere Verstärkerstufen nachgeschaltet, die insgesamt durch den Verstärkungsblock 15 symbolisiert sind. In diesem Verstärkungsblock 15 werden in einem Verstärkungsbereich von z.B. 0 - 72 dB Verstärkungsänderungen in diskreten Stufen von z.B. 0,375 dB realisiert. Die verstärkten Hydrofonausgangssignale werden im Digitalisierungsblock 16, der Analog/Digital-Wandler und diesen vorgeschaltete Anpaßverstärker umfaßt, digitalisiert. Die Verstärkungsschaltung 11 mit Verstärkerstufe 12 und Verstärkungsblock 15 sowie der Digitalisierungsblock 16 bilden einen sog. Hydrofonkanal 17, an dessen Ausgängen 171, 172 die digitalisierten Hydrofonausgangssignale zwecks Zuführung zu einer Signalverarbeitungseinheit abgenommen werden können. Die Bauelemente eines Hydrofonkanals 17 sind auf einer Leiterplatte angeordnet, die in einem Gehäuse aufgenommen ist, das zusammen mit dem Hydrofon 10 in der Empfangsantenne vergossen ist. Die Empfangsantenne weist eine Vielzahl von Hydrofonen 10 und daran angeschlossenen Hydrofonkanälen 17 auf. Für bestimmte Anwendungsfälle sind jeweils zwei Hydrofonkanäle parallel auf der in dem Gehäuse aufgenommenen Leiterkarte aufgebaut.

Zum Testen der Verstärkungsschaltung 11 auf Funktionsfähigkeit ist auf der gleichen Leiterkarte eine Schaltungsanordnung 18 aufgebaut, die die Einspeisung von Testsignalen in die Verstärkungsschaltung 11 ermöglicht. Diese Schaltungsanordnung 18, im folgenden kurz Testsignalschaltung 18 genannt, ist an den gleichen Eingängen der Verstärkungsschaltung 11 angeschlossen, an denen auch das Hydrofon 10 angeschlossen ist, also an den invertierenden Eingängen der beiden Ladungsverstärker 13, 14. Sind auf der Leiterkarte zwei oder mehrere Hydrofonkanäle 17 für zwei oder mehrere Hydrofone 10 untergebracht, so ist die Testsignalschaltung 18 ausgangsseitig mit allen Verstärkungsschaltungen 11 der Hydrofonkanäle 17 verbunden.

Die im Schaltbild links zu sehende Testsignalschaltung 18 weist eine niederohmige Spannungsquelle 20 auf, die vorzugsweise ein digitales Testsignal in Form einer Folge von Rechteckimpulsen erzeugt. Mit dem Testsignal wird eine erste Signalleitung 21 und mit dem invertierten Testsignal wird eine zweite Signalleitung 22 beaufschlagt. Hierzu ist die Spannungsquelle 20 über einen nichtinvertierenden Verstärker 23 mit der ersten Signalleitung 21 und über einen invertierenden Verstärker 24 mit der zweiten Signalleitung 22 verbunden. Die beiden Signalleitung 21, 22 sind hochohmig an den invertierenden Eingängen der beiden Ladungsverstärker 13, 14 angeschlossen. Die hochohmige Anbindung erfolgt dabei über Ohmsche Widerstände 25, 26, deren Widerstandswert im drei- oder vierstelligen kQ-Bereich liegt, also größer als 100 kΩ ist, aber auch im MΩ-Bereich liegen kann. Alternativ mit Inkaufnahme einer geringen Beeinflussung der Hydrofonausgangssignale durch die Testsignalschaltung 18 können anstelle der Widerstände 25, 26 auch Kondensatoren 27, 28 verwendet werden, deren Kapazität im einstelligen nF-Bereich liegt. Die Widerstandswerte der Ohmschen Widerstände 25, 26 und die Kapazitäten der Kondensatoren 27, 28 sind wegen der ebenfalls symmetrischen Ausbildung der Testsignalschaltung 18 jeweils gleich groß. In jeder Signalleitung 21, 22 sind ein erster elektronischer Schalter 29, 30 und ein zweiter elektronischer Schalter 31, 32 angeordnet. Alle elektronischen Schalter 29 - 32 sind als MOS-Switch ausgebildet, wie sie beispielsweise als monolithische CMOS-IC ADG 511, ADG 512 oder ADG 513 von der Firma One Technology Norwood, USA angeboten werden. Auf der Ausgangsseite eines jeden der ersten elektronischen Schalter 29, 30 ist ein Dämpfungsglied 33 bzw. 34 angeordnet, das als Spannungsteiler mit den Widerständen 35 und 36 ausgebildet ist. Die Widerstandswerte der Widerstände 35 und die Widerstandswerte der Widerstände 36 in beiden Spannungsteilen sind jeweils gleich groß, wobei die Widerstände der Widerstandswerte 36 wesentlich niederohmiger sind als die der Widerstände 35. Auf der Ausgangsseite der zweiten elektronischen Schalter 31, 32 verbindet ein niederohmiger Widerstand 37 die beiden Signalleitung 29, 30. Sein Widerstandswert entspricht beispielsweise dem Widerstandswert der Widerstände 35 in den beiden Dämpfungsglieder 33, 34. Auf der Eingangsseite der zweiten elektronischen Schalter 31, 32 ist ein Filter 38, bestehend aus einem in der Signalleitung 21 liegenden Widerstand 39, einem in der zweiten Signalleitung 30 liegenden Widerstand 40 und einem an den beiden Signalleitungen 21, 22 angeschlossenen Kondensator 41, angeordnet. Das Filter 38 dient einerseits zur Unterdrückung hochfrequenter Störungen und andererseits zur sinusähnlichen Verformung der von der Signalquelle 20 erzeugten Rechteckimpulse. Ggf. kann noch ein weiteres Filter vorgesehen werden. Zwischen dem Filter 38 und den zweiten elektronischen Schaltern 31, 32 ist in jeder Signalleitung 21, 22 noch ein weiteres Dämpfungsglied 43 bzw. 44 mit den Widerständen 45 und 46 ausgebildet. Die Widerstände 45 in den beiden Dämpfungsgliedern 43, 44 und die Widerstände 46 sind gleich bemessen und entsprechen mit ihren Widerstandswerten denen der Widerstände 35 und 36 in den Dämpfungsgliedern 33 und 34.

Zur Funktionsprüfung der Verstärkungsschaltung 11 werden die elektronischen Schalter 29 - 32 durch entsprechendes Anlegen von digitalen Steuersignalen geschlossen. Die an den Hydrofonausgängen 171, 172 abnehmbaren verstärkten Testsignale werden verglichen. Treten in einzelnen Hydrofonkanälen 17 erhebliche Abweichungen des verstärkten Testsignals im Vergleich zu den verstärkten Testsignalen aus anderen Hydrofonkanälen 17 auf, so weist dieses auf eine eingeschränkte Funktionalität oder eine Mißfunktion dieses Hydrofonkanals 17 hin.

Zur Deaktivierung des Testmodus und zur Herstellung des Empfangsbetriebs der Unterwasser-Empfangsantenne wird die Ansteuerung der elektronischen Schalter 29 - 32 wieder aufgehoben, so daß diese Schalter 29 - 32 öffnen und die Signalquelle 20 von der Verstärkungsschaltung 11 abgetrennt ist.

## Patentansprüche

1. Schaltungsanordnung zur Einspeisung von Testsignalen in mindestens eine Verstärkungsschaltung (11) für die Ausgangssignale eines Hydrofons (10) einer Unterwasser-Empfangsantenne, die mindestens eine symmetrische Verstärkerstufe (12) mit an den Hydrofonausgängen angeschlossenen Ladungsverstärkern (13, 14) aufweist, mit einer Signalquelle (20) zum Generieren von Testsignalen und mit mindestens einem elektronischen Schalter (29, 30) zum Einspeisen der Testsignale in die Verstärkungsschaltung (11), **dadurch gekennzeichnet, dass** die niederohmige Signalquelle (20) über einen nicht invertierenden Verstärker (23) an einer ersten Signalleitung (21) und über einen invertierenden Verstärker (24) an einer zweiten Signalleitung (22) angeschlossen ist, dass die Signalleitungen (21, 22) an den mit dem Hydrofon (10) verbundenen Eingängen der Ladungsverstärker (13, 14) hochohmig angeschlossen sind, dass in jeder Signalleitung (21, 22) ein elektronischer Schalter (29, 30) und ein auf der Ausgangsseite des elektronischen Schalters (29, 30) angeordnetes Dämpfungsglied (33, 34) vorgesehen sind und dass die Dämpfungsglieder (33, 34) als Spannungsteiler (35, 36) mit gleicher Widerstandsbemessung ausgebildet sind.

2. Schaltungsanordnung nach Anspruch 1, **dadurch gekennzeichnet, dass** der hochohmige Anschluss der Signalleitungen (21, 22) an jedem Ladungsverstärker (13, 14) mittels eines Kondensators (27, 28) mit kleiner Kapazität vorgenommen ist.

3. Schaltungsanordnung nach Anspruch 1, **dadurch gekennzeichnet, dass** der hochohmige Anschluss der Signalleitungen (21, 22) an jedem Ladungsverstärker (13, 14) mittels eines Ohmschen Widerstands (25, 26) mit großem Widerstandswert vorgenommen ist.

4. Schaltungsanordnung nach Anspruch 3, **dadurch gekennzeichnet, dass** der Widerstandswert größer als 100kΩ bemessen ist.

5. Schaltungsanordnung nach einem der Ansprüche 1 - 4, **dadurch gekennzeichnet, dass** in den Signalleitungen (21, 22) mindestens ein auf der Eingangsseite der elektronischen Schalter (29, 30) angeordnetes Filter (38) vorgesehen ist.

6. Schaltungsanordnung nach Anspruch 5, **dadurch gekennzeichnet, dass** das Filter (38) einen in jeder Signalleitung (21, 22) angeordneten Widerstand (39, 40) und einen an den beiden Signalleitungen (21, 22) angeschlossenen Kondensator (41) aufweist.

7. Schaltungsanordnung nach Anspruch 5 oder 6, **dadurch gekennzeichnet, dass** zwischen dem Filter (38) und den elektronischen Schaltern (29, 30) in jeder Signalleitung (21, 22) ein zweiter elektronischer Schalter (31, 32) angeordnet ist und dass auf der Ausgangsseite der zweiten elektronischen Schalter (31, 32) ein Widerstand (37) an den beiden Signalleitungen (21, 22) angeschlossen ist.

8. Schaltungsanordnung nach Anspruch 7, **dadurch gekennzeichnet, dass** zwischen dem Filter (38) und den zweiten elektronischen Schaltern (31, 32) in jeder Signalleitung (21, 22) ein zweites Dämpfungsglied (43, 44) angeordnet ist.

9. Schaltungsanordnung nach Anspruch 8, **dadurch gekennzeichnet, dass** die zweiten Dämpfungsglieder (43, 44) als Spannungsteiler mit gleicher Widerstandsbemessung ausgebildet sind.

10. Schaltungsanordnung nach einem der Ansprüche 1 - 9, **dadurch gekennzeichnet, dass** die elektronischen Schalter (29 - 32) als MOS-Switch ausgebildet sind.

11. Schaltungsanordnung nach einem der Ansprüche 1 - 10, **dadurch gekennzeichnet, dass** die Signalquelle (20) ein eine Impulsfolge von Rechteckimpulsen generierender Impulsgenerator ist.

## Claims

1. Circuit arrangement for feeding test signals into at least one amplification circuit (11) for the output signals from a hydrophone (10) of an underwater receiving antenna which has at least one balanced amplifier stage (12) with charge amplifiers (13, 14) connected to the hydrophone outputs, with a signal source (20) for generation of test signals and with at least one electronic switch (29, 30) for feeding the test signals to the amplification circuit (11), **characterized in that** the low-impedance signal source (20) is connected via a non-inverting amplifier (23) to a first signal line (21) and via an inverting amplifier (24) to a second signal line (22), **in that** the signal lines (21, 22) are connected with a high impedance to the inputs of the charge amplifiers (13, 14) which are connected to the hydrophone (10), **in that** an electronic switch (29, 30) and an attenuation element (33, 34), which is arranged on the output side of the electronic switch (29, 30), are provided in each signal line (21, 22) and **in that** the attenuation elements (33, 34) are in the form of voltage dividers (35, 36) with the same resistances.

2. Circuit arrangement according to Claim 1, **characterized in that** the high-impedance connection of the signal lines (21, 22) to each charge amplifier (13, 14) is provided by means of a capacitor (27, 28) with a low capacitance.

3. Circuit arrangement according to Claim 1, **characterized in that** the high-impedance connection of the signal lines (21, 22) to each charge amplifier (13, 14) is provided by means of a non-reactive resistor (25, 26) with a high resistance.

4. Circuit arrangement according to Claim 3, **characterized in that** the resistance is greater than 100 kΩ.

5. Circuit arrangement according to one of Claims 1 to 4, **characterized in that** at least one filter (38) is provided in the signal lines (21, 22) and is arranged on the input side of the electronic switches (29, 30).

6. Circuit arrangement according to Claim 5, **characterized in that** the filter (38) has a resistor (39, 40) arranged in each signal line (21, 22), and has a capacitor (41) connected to the two signal lines (21, 22).

7. Circuit arrangement according to Claim 5 or 6, **characterized in that** a second electronic switch (31, 32) is arranged in each signal line (21, 22) between the filter (38) and the electronic switches (29, 30), and **in that** a resistor (37) is connected to the two signal lines (21, 22) on the output side of the second electronic switches (31, 32).

8. Circuit arrangement according to Claim 7, **characterized in that** a second attenuation element (43, 44) is arranged in each signal line (21, 22) between the filter (38) and the second electronic switches (31, 32).

9. Circuit arrangement according to Claim 8, **characterized in that** the second attenuation elements (43, 44) are in the form of voltage dividers with the same resistances.

10. Circuit arrangement according to one of Claims 1 to 9, **characterized in that** the electronic switches (29-32) are in the form of MOS switches.

11. Circuit arrangement according to one of Claims 1 to 10, **characterized in that** the signal source (20) is a pulse generator which generates a pulse sequence of square-wave pulses.

## Revendications

1. Circuit pour alimenter en signaux d'essai au moins un circuit d'amplification (11) pour les signaux de sortie d'un hydrophone (10) d'une antenne réceptrice immergée dans l'eau, qui présente au moins un étage d'amplification symétrique (12) avec des amplificateurs de charge (13, 14) raccordés aux sorties d'hydrophone, comprenant une source de signal (20) pour générer des signaux d'essai et au moins un commutateur électronique (29, 30) pour alimenter en signaux d'essai le circuit d'amplification (11), **caractérisé en ce que** la source de signal (20) de faible impédance est connectée, via un amplificateur non inverseur (23), à une première ligne de signalisation (21) et via un amplificateur inverseur (24) à une seconde ligne de signalisation (22), **en ce que** les lignes de signalisation (21, 22) sont connectées avec une impédance élevée aux entrées des amplificateurs de charge (13, 14) reliées à l'hydrophone (10), **en ce que** chaque ligne de signalisation (21, 22) est pourvue d'un commutateur électronique (29, 30) et d'un atténuateur (33, 34) agencé sur le côté de sortie du commutateur électronique (29, 30) et **en ce que** les atténuateurs (33, 34) se présentent sous la forme de diviseurs de tension (35, 36) ayant le même dimensionnement de résistance.

2. Circuit selon la revendication 1, **caractérisé en ce que** la connexion à impédance élevée des lignes de signalisation (21, 22) à chaque amplificateur de charge (13, 14) s'effectue à l'aide d'un condensateur (27, 28) de petite capacité.

3. Circuit selon la revendication 1, **caractérisé en ce que** la connexion à impédance élevée des lignes de signalisation (21, 22) à chaque amplificateur de charge (13, 14) s'effectue à l'aide d'une résistance ohmique (25, 26) ayant une grande valeur de résistance.

4. Circuit selon la revendication 3, **caractérisé en ce que** la valeur de résistance est dimensionnée de sorte qu'elle soit supérieure à 100 kQ.

5. Circuit selon l'une quelconque des revendications 1 à 4, **caractérisé en ce qu'**il est prévu dans les lignes de signalisation (21, 22) au moins un filtre (38) agencé sur le côté d'entrée des commutateurs électroniques (29, 30).

6. Circuit selon la revendication 5, **caractérisé en ce que** le filtre (38) présente une résistance (39, 40) agencée dans chaque ligne de signalisation (21, 22) et un condensateur (41) connecté aux deux lignes de signalisation (21, 22).

7. Circuit selon l'une quelconque des revendications 5 ou 6, **caractérisé en ce qu'**un deuxième commutateur électronique (31, 32) est agencé entre le filtre (38) et les commutateurs électroniques (29, 30) dans chaque ligne de signalisation (21, 22) et **en ce qu'**une résistance (37) est connectée aux deux lignes de signalisation (21, 22) sur le côté de sortie des deuxièmes commutateurs électroniques (31, 32).

8. Circuit selon la revendication 7, **caractérisé en ce qu'**un deuxième atténuateur (43, 44) est agencé entre le filtre (38) et les deuxièmes commutateurs électroniques (31, 32) dans chaque ligne de signalisation (21, 22).

9. Circuit selon la revendication 8, **caractérisé en ce que** les deuxièmes atténuateurs (43, 44) se présentent sous la forme de diviseurs de tension de même dimensionnement de résistance.

10. Circuit selon l'une quelconque des revendications 1 à 9, **caractérisé en ce que** les commutateurs électroniques (29 à 32) se présentent sous la forme de commutateurs MOS.

11. Circuit selon l'une quelconque des revendications 1 à 10, **caractérisé en ce que** la source de signal (20) est un générateur d'impulsions qui génère une série d'impulsions rectangulaires.
